# EUROPEAN PATENT APPLICATION

(11) **EP 4 618 664 A1**
(43) Date of publication of application: **17.09.2025**
(21) Application number: 22964900.9
(22) Date of filing: 11.11.2022
(51) Int. Cl.: H04W 72/0446, H04W 72/02

(54) **CONTINUOUS MULTI-SLOT TRANSMISSION METHOD AND APPARATUS, DEVICE, STORAGE MEDIUM, AND CHIP**

(71) Applicant: Beijing Xiaomi Mobile Software Co., Ltd., Beijing 100085 (CN)
(72) Inventor: ZHAO, Wensu, Beijing 100085 (CN)
(74) Representative: Gunzelmann, Rainer
(86) International application number: PCT/CN2022/131564
(87) International publication number: WO 2024/098432

(57) **Abstract**

The present disclosure provides a continuous multi-slot transmission method and apparatus, a device, a storage medium, and a chip. The continuous multi-slot transmission method comprises: a UE determining via a physical layer a candidate resource set satisfying a preset condition, the candidate resource set being reported to a high layer of the UE, and the high layer being used to select a target resource from the candidate resource set, a time domain of the target resource comprising a plurality of continuous single-time-slot resources used for transmitting a plurality of continuous transmission blocks.

## Description

### TECHNICAL FIELD

The disclosure relates to a communication field, in particular to a method for continuous multi-slot transmission, an apparatus for continuous multi-slot transmission, a device, a storage medium and a chip.

### BACKGROUND

Sidelink technology, also known as direct link or bypass link technology, enables direct communication between User Equipments (UEs). The time slot resources for data transmission are determined by sidelink-related portions of the 3rd Generation Partnership Project (3GPP) communication protocol. And in the relevant protocol, it is the resources of a single-slot that are included in the candidate resource set determined and reported to a higher layer.

### SUMMARY

In order to overcome problems in related arts, the disclosure provides a method for continuous multi-slot transmission, an apparatus for continuous multi-slot transmission, a device, a storage medium and a chip.

According to a first aspect of embodiments of the disclosure, a method for continuous multi-slot transmission, applied to a UE, is provided. The method includes: determining a candidate resource set that meets a preset condition; and selecting a target resource from the candidate resource set, wherein the target resource comprises continuous multiple single-slot resources in a time domain for transmitting continuous multiple transport blocks.

According to a second aspect of embodiments of the disclosure, an apparatus for continuous multi-slot transmission, configured in a UE, is provided. The apparatus includes: a processing module, configured to determine a candidate resource set that meets a preset condition; and a selecting module, configured to select a target resource from the candidate resource set, wherein the target resource comprises continuous multiple single-slot resources in a time domain for transmitting continuous multiple transport blocks.

According to a third aspect of embodiments of the disclosure, a UE is provided. The UE includes: a processor and a memory for storing instructions executable by the processor. The processor is configured to implement the steps of the above method when executing the executable instructions.

According to a fourth aspect of embodiments of the disclosure, a computer readable storage medium having computer programs/instructions stored thereon is provided. When the programs/instructions are executed by a processor, the steps of the above method are implemented.

According to a fifth aspect of embodiments of the disclosure, a chip is provided. The chip includes: a processor and an interface. The processor is configured to read instructions to perform the steps of the above method.

The technical scheme provided by the embodiment of the disclosure includes the following beneficial effects.

In the above technical scheme, the candidate resource set that meets the preset condition is determined, and then the target resource is selected from the candidate resource set. The target resource includes continuous multiple single-slot resources in the time domain for sending continuous multiple transport blocks. It can be seen that by determining the candidate resource set that meets the preset condition, the target resource including continuous multiple single-slot resources in the time domain may be selected from the candidate resource set, which ensures a transmission of continuous multiple transport blocks, thereby enabling the UE to support continuous multiple time slot transmission.

It should be understood that the above general description and the following detailed descriptions are exemplary and explanatory only and do not limit the disclosure.

### BRIEF DESCRIPTION OF THE DRAWINGS

FIG. 1 is a schematic diagram of continuous multi-slot transmission according to an exemplary embodiment of the disclosure.
FIG. 2 is a flowchart of a method for continuous multi-slot transmission according to an exemplary embodiment of the disclosure.
FIG. 3 is a flowchart of a method for continuous multi-slot transmission according to an exemplary embodiment of the disclosure.
FIG. 4 is a flowchart of a method for continuous multi-slot transmission according to an exemplary embodiment of the disclosure.
FIG. 5 is a flowchart of a method for continuous multi-slot transmission according to an exemplary embodiment of the disclosure.
FIG. 6 is a flowchart of a method for continuous multi-slot transmission according to an exemplary embodiment of the disclosure.
FIG. 7 is a flowchart of a method for continuous multi-slot transmission according to an exemplary embodiment of the disclosure.
FIG. 8 is a flowchart of a method for continuous multi-slot transmission according to an exemplary embodiment of the disclosure.
FIG. 9 is a flowchart of a method for continuous multi-slot transmission according to an exemplary embodiment of the disclosure.
FIG. 10 is a block diagram of an apparatus for continuous multi-slot transmission according to an exemplary embodiment of the disclosure.
FIG. 11 is a block diagram of a device for continuous multi-slot transmission according to an exemplary embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

It is understood that the term "multiple" in the disclosure refers to two or more, which is the similar for other quantifiers. The term "and/or" describes relations of associated objects, which indicates three relations. For example, "A and/or B" indicates that A exists alone, A and B both exist, and B exists alone. The character "/" generally indicates that the associated objects prior to and after the character "/" is an "or" relation. The terms "a", "said" and "the" in the singular form are also intended to include the plural form, unless the context clearly indicates otherwise.

It is further understood that although the operations are depicted in the accompanying drawings in a particular order in the embodiments of the disclosure, it should not be construed as requiring that the operations are performed in the particular sequence shown or in a serial sequence, or that all of the operations shown be performed to obtain the desired results. Multitasking and parallel processing may be advantageous in particular environments.

It should be noted that all the actions of obtaining signals, information or data in the disclosure are carried out under the premise of complying with the corresponding data protection laws and policies of the local country with authorization from the corresponding equipment owner.

Before introducing the method for continuous multi-slot transmission provided by the disclosure, firstly, scenarios involved in the method are introduced. In order to support direct communication between UEs, 3GPP Release 16 (R16) has introduced sidelink technology, which is also called direct link or bypass link technology. Based on sidelink, direct communication between UEs can be realized through a PC-5 interface. Sidelink can be applied to a 4th Generation (4G) mobile communication technology, a 5th generation (5G) mobile communication technology or other possible communication technologies, such as subsequent evolutionary technologies for 5G communication technology.

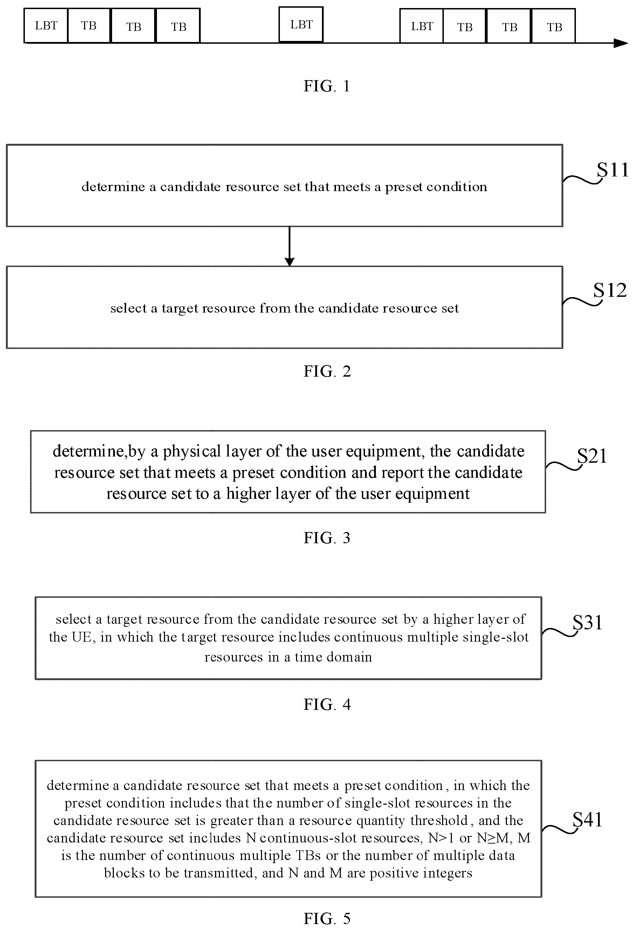

In related arts, continuous multi-slot transmission is supported in a sidelink unlicensed frequency band. The continuous multi-slot transmission may be a continuous transmission of multiple different Transport Blocks (TBs) from the same UE, or a continuous repeated transmission of multiple identical TBs from the same UE. As illustrated in FIG. 1, FIG. 1 is a schematic diagram of continuous multi-slot transmission according to an exemplary embodiment of the disclosure. After the first and third successful listen before talk (LBT), a transmission of three continuous TBs is performed. It should be noted that LBT means that a radio environment is monitored before transmission to detect whether a channel is idle. If the channel is busy, transmission will not be carried out until the channel is idle, so as to avoid channel access conflicts and realize channel spectrum sharing.

The applicants have found that determining a candidate resource set (SA) according to steps set forth in the R16 38.214 communication protocol under the sidelink unlicensed frequency band may result in an absence of continuous multi-slot resources in the candidate resource set reported by a physical layer, and cannot support continuous multi-slot data transmission. Therefore, the disclosure provides a method for continuous multi-slot transmission to solve the above problems.

FIG. 2 is a flowchart of a method for continuous multi-slot transmission according to an exemplary embodiment of the disclosure. The method is performed by a UE, such as a smart phone, a tablet device, a personal digital assistant, a wearable smart device or other mobile UEs that support sidelink technology. As illustrated in FIG. 2, the method includes the following steps.

At step S11, a candidate resource set that meets a preset condition is determined, in which the candidate resource set includes at least one continuous-multiple-time-domain resource.

The continuous-multiple-time-domain resource includes: two or more continuous single time domain resources.

The candidate resource set (which is denoted as SA in R16 38.214 protocol) is a set containing multiple time domain resources for the UE data transmission. In the embodiment of the disclosure, the time domain resource may be a symbol, a time slot, a subframe, a frame or any other time domain resources. In the following embodiments of the disclosure, taking time slot as an illustrative example, i.e., a time domain resource may be exemplified as a time slot resource, a continuous-multiple-time-domain resource refer to continuous multiple single-slot resources.

During the process of determining the candidate resource set, the UE reports the candidate resource set that meets the preset condition to a higher layer of the UE. The preset condition includes a restriction condition on the number of single-slot resources in the candidate resource set and a restriction condition on the number of continuous multiple single-slot resources in the candidate resource set. These continuous multiple single-slot resources are used for transmitting continuous multiple TBs or TBs to be transmitted. The term "multiple" refers to two or more.

The communication protocol typically adopts the following hierarchical structure, including an application layer, a transport layer, a network layer, a data link layer, a Medium Access Control (MAC) layer and a physical layer. Each layer transmits to the resources provided by its next layer to fulfill its own requirements. The higher layer here refers to a layer above a layer where the candidate resource set is determined.

At step S12, a target resource is selected from the candidate resource set.

The target resource includes continuous multiple single-slot resources on the time domain. The target resource is used to send continuous multiple TBs. For example, the UE may select a target resource including continuous multiple single-slot resources on the time domain from the candidate resource set.

In the above technical scheme, the UE reports the candidate resource set including continuous multiple single-slot resources to the higher layer of the UE, so that the higher layer of the UE can select continuous multiple single-slot resources from the candidate resource set to send continuous multiple TBs, thereby enabling the UE to support continuous multi-slot transmission.

FIG. 3 is a flowchart of a method for continuous multi-slot transmission according to an exemplary embodiment of the disclosure. The method is performed by a UE, such as a smart phone, a tablet device, a personal digital assistant, a wearable smart device or other mobile UEs that support sidelink technology. As illustrated in FIG. 3, the method includes the following steps.

At step S21, the candidate resource set is determined that meets a preset condition and reported to a higher layer of the UE by a physical layer of the UE.

The candidate resource set may be a set containing multiple single-slot resources, which are used for the UE to send data. For example, the process of determining the candidate resource set by the UE is performed by the physical layer of the UE, and the candidate resource set that meets the preset condition is reported to the higher layer of the UE during the process of determining the candidate resource set by the physical layer of the UE. The preset condition includes a restriction condition on the number of single-slot resources in the candidate resource set and a restriction conditions on the number of continuous multiple single-slot resources in the candidate resource set. These continuous multiple single-slot resources are used for transmitting continuous multiple TBs or TBs to be transmitted.

The communication protocol typically adopts the following hierarchical structure, including an application layer, a transport layer, a network layer, a data link layer, a MAC layer and a physical layer. Each layer transmits to the resources provided by its next layer to fulfill its own requirement. In the embodiment, since the process of determining the candidate resource set is performed by the physical layer of the UE, the higher layer of the UE may be the MAC layer in the embodiment. The MAC layer is above the physical layer, and it belongs to a lower sub-layer of the data link layer. The MAC layer is used to define how data packets are transmitted in the medium. The data link layer may be divided into an upper sub-layer (Logic Link Control (LLC) layer) and the lower sub-layer (MAC layer).

In the above technical scheme, it is possible to report the candidate resource set including continuous multiple single-slot resources to the higher layer of the UE through the physical layer of the UE, enabling the higher layer of the UE to select continuous multiple single-slot resources from the candidate resource set to send continuous multiple TBs, thereby enabling the UE to support continuous multi-slot transmission.

FIG. 4 is a flowchart of a method for continuous multi-slot transmission according to an exemplary embodiment of the disclosure. The method is performed by a UE, such as a smart phone, a tablet device, a personal digital assistant, a wearable smart device or other mobile UEs that support sidelink technology. As illustrated in FIG. 4, the method includes the following steps.

At step S31, a target resource is selected from a candidate resource set by a higher layer of the UE, in which the target resource includes continuous multiple single-slot resources in a time domain.

In an implementation, the continuous multiple single-slot resources may be used to send continuous multiple TBs.

For example, the higher layer of the UE may be the above-mentioned MAC layer, and the introduction of the MAC layer may refer to the above step S21 and will not be repeated here. After obtaining the candidate resource set, the MAC layer of the UE may select the target resource including continuous multiple single-slot resources on the time domain from the candidate resource set. The target resource, for example, may be used for sending continuous multiple TBs.

For example, it is possible to report the candidate resource set including continuous multiple single-slot resources to the MAC layer of the UE through the physical layer of the UE, enabling the MAC layer of the UE to select continuous multiple single-slot resources from the candidate resource set to send continuous multiple TBs. The method for the physical layer of the UE to obtain the candidate resource set may refer to the above step S21, and will not be repeated here.

In the above technical scheme, it is possible to report the candidate resource set including continuous multiple single-slot resources to the MAC layer of the UE through the physical layer of the UE, enabling the MAC layer of the UE to select continuous multiple single-slot resources from the candidate resource set to send continuous multiple TBs, thereby enabling the UE to support continuous multi-slot transmission.

FIG. 5 is a flowchart of a method for continuous multi-slot transmission according to an exemplary embodiment of the disclosure. The method is performed by a UE, such as a smart phone, a tablet device, a personal digital assistant, a wearable smart device or other mobile UEs that support sidelink technology. As illustrated in FIG. 5, the method includes the following steps.

At step S41, a candidate resource set that meets a preset condition is determined, in which the preset condition includes that the number of single-slot resources in the candidate resource set is greater than a resource quantity threshold, and the candidate resource set includes N continuous-slot resources, N>1 or N≥M, M is the number of continuous multiple TBs or the number of multiple data blocks to be transmitted, and N and M are positive integers.

The method for determining the candidate resource set by the UE in step S41 may refer to the method shown in step S11 or step S21 mentioned above, or can be implemented in other ways, which will not be repeated here.

For example, the preset condition for the UE to determine the candidate resource set may include that the number of single-slot resources in the candidate resource set is greater than a resource quantity threshold, and the candidate resource set includes N continuous single-slot resources, N and M are positive integers, N>1 or N≥M, M is the number of continuous multiple TBs or the number of multiple data blocks to be transmitted. M may be pre-configured, or may be indicated by downlink control information (DCI) sent by a base station, or indicated by sidelink control information (SCI) sent by other UEs.

The resource quantity threshold is determined by *X · M*ₜₒₜₐₗ . X is a proportional coefficient, and its value may be determined based on a network pre-configuration or in other feasible ways. The value of X can be 20%, 35%, or 50%, etc., which is not limited by the disclosure. *M*ₜₒₜₐₗ represents the number of single-slot resources in a resource selection window. N > 1 indicates that the candidate resource set includes at least two continuous time slot resources, which may be used to send two continuous TBs. N is greater than or equal to the number M of continuous TBs, indicating that the candidate resource set includes M or more continuous time slot resources, which may be used for sending continuous M TBs by way of example. Therefore, in a case that the number of single-slot resources in the candidate resource set is greater than *X · M*ₜₒₜₐₗ and N > 1 or N≥M, the higher layer of the UE (such as the MAC layer mentioned above) may select a target resource containing continuous time slot resources from the candidate resource set, which may be used to send continuous multiple TBs.

In the above technical scheme, the physical layer of the UE determines the candidate resource set containing continuous multiple single-slot resources through the above preset condition, and then reports the candidate resource set to the higher layer, so that the higher layer may select continuous multiple single-slot resources from the candidate resource set to send continuous multiple TBs, thereby enabling the UE to support continuous multi-slot transmission.

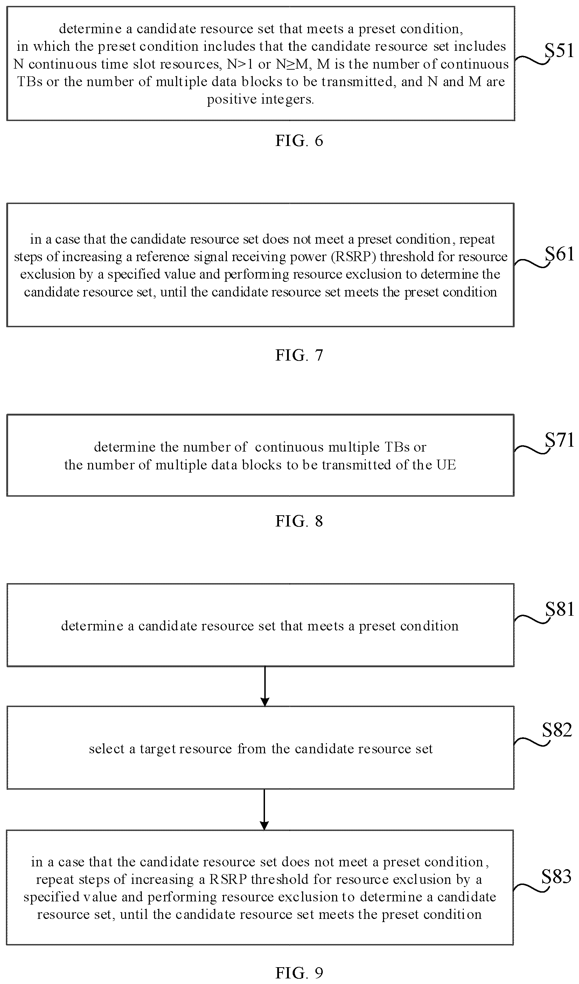

FIG. 6 is a flowchart of a method for continuous multi-slot transmission according to an exemplary embodiment of the disclosure. The method is performed by a UE, such as a smart phone, a tablet device, a personal digital assistant, a wearable smart device or other mobile UEs that support sidelink technology. As illustrated in FIG. 6, the method includes the following steps.

At step S51, a candidate resource set that meets a preset condition is determined, in which the preset condition includes that the candidate resource set includes N continuous-slot resources, N>1 or N≥M, M is the number of continuous TBs or the number of multiple data blocks to be transmitted, and N and M are positive integers.

The method for the UE to determine the candidate resource set in step S51 may refer to the method shown in step S11 or step S21 mentioned above, or can be implemented in other ways, which will not be repeated here.

For example, the preset condition for the UE to determine the candidate resource set includes that the candidate resource set includes N continuous-slot resources, N is a positive integer, N > 1 or N≥M, and M is the number of continuous TBs or the number of multiple data blocks to be transmitted. M may be pre-configured, indicated by DCI sent by a base station, or indicated by SCI sent by other UEs.

N>1 indicates that the candidate resource set includes at least two continuous time slot resources, which may be used to send two continuous TBs. N is greater than or equal to the number M of continuous TBs or of multiple data blocks to be transmitted to be sent, indicating that the candidate resource set includes M or more continuous time slot resources for sending M continuous TBs. Therefore, in a case of N>1 or N≥M, the higher layer of the UE (e.g., the MAC layer mentioned above) may select the target resource containing continuous slot resources from the candidate resource set, which may be used to send continuous multiple TBs.

In the above technical scheme, the physical layer of the UE determines the candidate resource set containing continuous multiple single-slot resources based on the above preset condition, and then reports the candidate resource set to the higher layer of the UE, so that the higher layer may select continuous multiple single-slot resources from the candidate resource set to send continuous multiple TBs, thereby enabling the UE to support continuous multi-slot transmission.

FIG. 7 is a flowchart of a method for continuous multi-time-slot transmission according to an exemplary embodiment of the disclosure. The method is performed by a UE, such as a smart phone, a tablet device, a personal digital assistant, a wearable smart device or other mobile UEs that support sidelink technology. As illustrated in FIG. 7, the method includes the following steps.

At step S61, in a case that the candidate resource set does not meet a preset condition, after increasing a reference signal receiving power (RSRP) threshold for resource exclusion by a specified value, resource exclusion is performed to determine the candidate resource set repeatedly until the candidate resource set meets the preset condition.

For example, the contents included in the preset condition may refer to the preset condition described in step S41 or S51 above, which will not be repeated here. In the case that the candidate resource set selected by the UE does not meet the preset condition, the RSRP threshold for resource exclusion is increased by the specified value, and then the physical layer of the UE may determine the candidate resource set by performing resource exclusion repeatedly until the candidate resource set meets the preset condition. The RSRP threshold may be the RSRP threshold *Th*(*pᵢ,pⱼ*) specified in the R16 38.214 protocol, where *pᵢ* represents a priority value indicated by SCI in a TB received by the UE (i.e., the above UE) from other UEs, and *pⱼ* represents a priority corresponding to TBs to be sent by the UE (i.e. the above UE).

That is, in the case that the candidate resource set does not contain continuous slot resources, after increasing the RSRP threshold for resource exclusion by the specified value, unavailable slot resources in the set are excluded, and the remaining available slot resources are used as a new candidate resource set to again carry out the determination of whether or not the preset condition is met. The above process is performed repeatedly until the candidate resource set determined by the UE meets the preset condition. For example, the specified value may be 3db. After increasing the RSRP threshold by 3db, the number of single-slot resources used to send TBs increases, and thus the number of single-slot resources in the candidate resource set increases. At this time, it is determined whether the candidate resource set meets the preset condition, and if the candidate resource set meets the preset condition, the candidate resource set is reported to the upper layer of the UE, such as the MAC layer. If the candidate resource set still does not meet the preset condition, the previous RSRP threshold is increased again by 3db, and then it is determined whether the candidate resource set meets the preset condition. The process is performed repeatedly until the candidate resource set determined by the physical layer of the UE meets the preset condition.

In the above technical scheme, in the case that the candidate resource set does not contain continuous time slot resources, by increasing the RSRP threshold for resource exclusion, the number of slot resources in the candidate resource set increases. The process is performed repeatedly until the candidate resource set that meets the preset condition is determined, thereby realizing that the candidate resource set contains continuous multiple time slot resources.

FIG. 8 is a flowchart of a method for continuous multiple time slot transmission according to an exemplary embodiment of the disclosure. The method is performed by a UE, such as a smart phone, a tablet device, a personal digital assistant, a wearable smart device or other mobile UEs that support sidelink technology. As illustrated in FIG. 8, the method includes the following steps.

At step S71, the number of continuous multiple TBs or the number of multiple data blocks to be transmitted is determined.

The number M of the continuous multiple TBs may be pre-configured, i.e., the UE may obtain the number of continuous multiple TBs by reading a pre-configured value of M. Or, M is indicated by DCI sent by a base station or indicated by SCI sent by other UEs. After receiving the DCI or SCI, the UE obtains the number of continuous multiple TBs indicated by the DCI or SCI.

FIG. 9 is a flowchart of a method for continuous multiple time slot transmission according to an exemplary embodiment of the disclosure. The method is performed by a UE, such as a smart phone, a tablet device, a personal digital assistant, a wearable smart device or other mobile UEs that support sidelink technology. As illustrated in FIG. 9, the method includes the following steps.

At step S81, a candidate resource set that meets a preset condition is determined.

The method for the UE to determine the candidate resource set in step S81 may refer to the method shown in step S11, step S21 or other methods. For example, the preset condition can refer to the preset condition shown in step S41 or step S51 or other methods, which will not be repeated here.

At step S82, a target resource is selected from the candidate resource set.

The target resource includes continuous multiple single-slot resources on the time domain.

In some implementations, for example, the continuous multiple single-slot resources may be used to send continuous multiple TBs. The method of selecting the target resource in step S82 can refer to the method shown in step S12 or step S31, which will not be repeated here.

At step S83, in a case that the candidate resource set does not meet a preset condition, repeat steps of increasing a RSRP threshold for resource exclusion by a specified value and performing resource exclusion to determine a candidate resource set, until the candidate resource set meets the preset condition.

For example, step S83 may refer to the method shown in the step S61 or other methods, which will not be repeated here.

In the above technical scheme, after determining the candidate resource set that meets the preset condition, the physical layer of the UE reports the candidate resource set including continuous multiple single-slot resources to the higher layer, such as the MAC layer, so that the higher layer may select continuous multiple single-slot resources from the candidate resource set to send multiple continuous TBs, thereby enabling the UE to support continuous multiple time slot transmission.

Optionally, the above steps S21 and S31 can be combined, the above steps S11 or S21 can be combined with step S41, the above steps S11 or S21 can be combined with step S51, the above steps S11 and S12 can be combined with step S61, and the above steps S21, S31 and S61 can be combined.

It should be noted that the above embodiments executed by the UE can be implemented independently or together in any way, which is not limited in the embodiment of the disclosure.

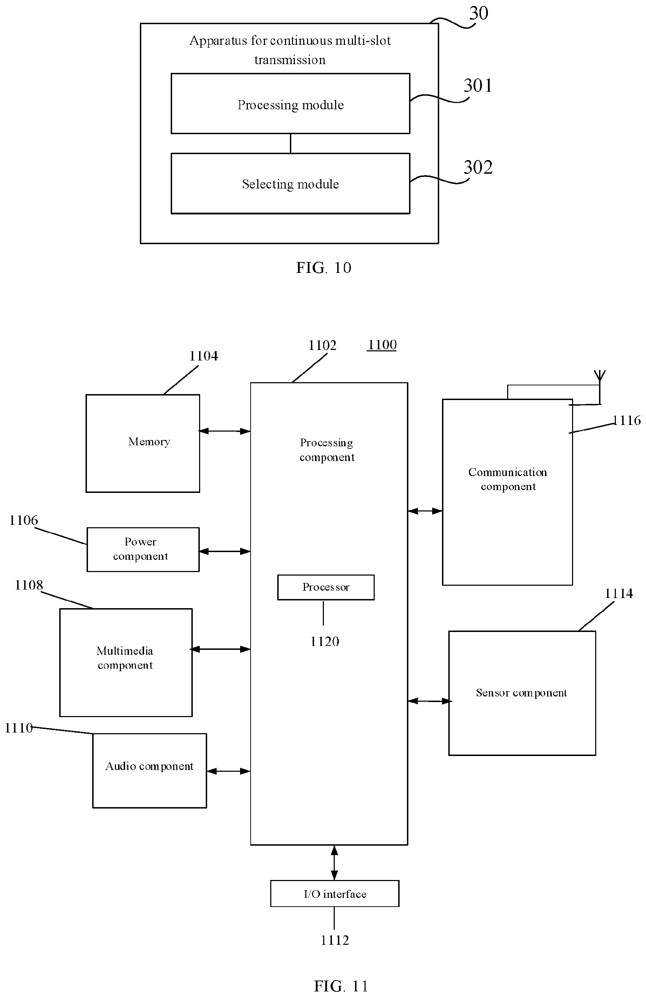

FIG. 10 is a block diagram of an apparatus 30 for continuous multi-slot transmission according to an exemplary embodiment of the disclosure. As illustrated in FIG. 3, the apparatus 30 includes: a processing module 301 and a selecting module 302.

The processing module 301 is configured to: determine a candidate resource set that meets a preset condition.

The selecting module 302 is configured to: select a target resource from the candidate resource set, in which the target resource includes continuous multiple single-slot resources in a time domain for transmitting continuous multiple TBs.

Optionally, the processing module 301 is configured to: report the candidate resource set to a higher layer of the UE by a physical layer of the UE determining the candidate resource set that meets a preset condition.

Optionally, the selecting module 302 is configured to: select the target resource from the candidate resource set through a higher layer of the UE.

Optionally, the preset condition includes that the number of single-slot resources in the candidate resource set is greater than a resource quantity threshold, and the candidate resource set includes N continuous time slot resources, in which N>1 or N ≥M, M is the number of continuous TBs, and N and M are positive integers.

Optionally, the preset condition includes that the candidate resource set includes N continuous slot resources, in which N>1 or N ≥ M, M is the number of continuous TBs, and N and M are positive integers.

Optionally, the apparatus for continuous multi-slot transmission also includes: a threshold adjustment module, configured to:

in a case that the candidate resource set does not meet the preset condition, after increasing a RSRP threshold for resource exclusion by a specified value, perform resource exclusion repeatedly to determine the candidate resource set until the candidate resource set meets the preset condition.

Optionally, the number M of the continuous multiple TBs is pre-configured, or the number of the continuous multiple TBs is indicated by DCI or SCI.

In the above technical scheme, the candidate resource set that meets the preset condition is determined, and then the target resource is selected from the candidate resource set. The target resource includes continuous multiple single-slot resources in the time domain for sending continuous multiple TBs. It can be seen that by determining the candidate resource set that meets the preset condition, the target resource including continuous multiple single-slot resources in the time domain can be selected from the candidate resource set, which ensures a transmission of continuous multiple TBs, thereby enabling the UE to support continuous multiple time slot transmission.

With regard to the apparatus in the above embodiment, the specific way in which each module performs its operation has been described in detail in the method embodiments, and will not be described in detail here.

The disclosure also provides a computer readable storage medium on which computer programs/instructions are stored. When the computer programs/instructions are executed by a processor, the steps of the method for continuous multi-slot transmission provided by the disclosure are realized.

FIG. 11 is a block diagram of a device 1100 for continuous multi-slot transmission according to an exemplary embodiment of the disclosure. For example, the device 1100 may be a mobile phone, a computer, a digital broadcasting terminal, a message transceiver device, a game console, a tablet device, a medical device, a fitness device and a personal digital assistant.

As illustrated in FIG. 11, the device 1100 includes one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the device 1100, such as the operations associated with display, telephone calls, data communications, camera operations, and recording operations. The processing component 1102 may include one or more processors 1120 to perform all or part of the steps in the above described method. Moreover, the processing component 1102 may include one or more modules which facilitate the processing component 1102 to interact with other components. For example, the processing component 1102 may include a multimedia module to facilitate the processing component 1102 to interact with the multimedia component 1108.

The memory 1104 is configured to store various types of data to support the operation of the device 1100. Examples of such data include instructions for any applications or methods operated on the device 1100, contact data, phonebook data, messages, pictures, videos, etc. The memory 1104 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 1108 includes a front-facing camera and/or a rear-facing camera. When the device 1100 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1110 is configured to output and/or input audio signals. For example, the audio component 1110 includes a microphone (MIC) configured to receive an external audio signal when the device 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a Complementary Metal Oxide Semiconductor (CMOS) or Charge-Coupled Device (CCD) image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the device 1100 and other devices. The device 1100 can access a wireless network based on a communication standard, such as Wi-Fi, 2G or 3G, or a combination thereof. In an exemplary embodiment, the communication component 1116 receives a broadcast signal or broadcast associated information from an external broadcast management system via a broadcast channel. In an exemplary embodiment, the communication component 1116 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the device 1100 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In an exemplary embodiment, a non-transitory computer readable storage medium including instructions is provided, such as the memory 1104 including instructions. The instructions can be executed by the processor 1120 of the device 1100 to complete the above method. For example, the non-transitory computer readable storage medium may be ROM, a random access memory (RAM), a CD-ROM, a magnetic tape, a floppy disk, an optical data storage device, etc.

The device may be an independent electronic device or a part of an independent electronic device. For example, in an embodiment, the device may be an integrated circuit (IC) or a chip, in which the integrated circuit may be one IC or a collection of multiple ICs. The chip includes, but is not limited to, the following types: a Graphics Processing Unit (GPU), a Central Processing Unit (CPU), a FPGA, a DSP, an ASIC, a System on Chip (SoC), etc. The integrated circuit or chip can be used to execute executable instructions (or codes) to implement the above-mentioned method. The executable instructions may be stored in the integrated circuit or chip, or may be obtained from other devices or apparatuses. For example, the integrated circuit or chip includes a processor, a memory, and an interface for communicating with other devices. The executable instruction may be stored in the memory, and when the executable instruction is executed by the processor, the above-mentioned method is implemented. Alternatively, the integrated circuit or chip can receive the executable instruction through the interface and transmit it to the processor for execution, so as to implement the above-mentioned method.

In another exemplary embodiment, a computer program product is provided. The device includes a computer program executable by a programmable device. The computer program has a code portion for executing the above-mentioned method when being executed by the programmable device.

Other embodiments of the disclosure will be apparent to those skilled in the art from consideration of the specification and practice of the disclosure disclosed here. The application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the attached claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

It is understood that the schemes proposed in the following examples are examples of the embodiments of the method for continuous multi-slot transmission, the apparatus for continuous multi-slot transmission, the device for continuous multi-slot transmission, the storage medium and the chip in the disclosure.

1. In the sidelink unlicensed frequency band, the physical layer of the UE reports the candidate resource set S_{A} containing continuous multiple time slot resources to the higher layer of the UE.

(a) As an example, during the process of determining the candidate resource set by the physical layer, a judgment condition in step 7 of R16/17 (sidelink) 8.1.4 is reused, i.e., whether the number of candidate single-slot resources in the candidate resource set SA is less than *X · M*ₜₒₜₐₗ (defined as judgment condition 1), but an additional judgment condition is added, i.e., whether the length N of the continuous time slots between the candidate single-slot resources in the candidate resource set S_{A} satisfies N>1 or N ≥ M (defined as judgment condition 2) is added. The judgment conditions 1 and 2 are preset conditions.

M is the number of continuous multiple TBs to be transmitted, which is pre-configured, pre-defined, or a value in a set of numbers indicated by DCI/SCI.

Case 1: in a case that both the judgment condition 1 and the judgment condition 2 are met, that is, the preset conditions are met, the physical layer reports the candidate resource set S_{A} to the higher layer.

Case 2: in a case that the judgment condition 1 is met, but the judgment condition 2 is not met, that is, the preset conditions are not met, the physical layer performs the following steps.

The RSRP threshold *Th*(*pᵢ,pⱼ*) is increased by Xdb, for example, X=3db, and then it goes back to step 4 of determining the candidate resource set in R16 38.214, and executes from step 4 repeatedly until the candidate resource set S_{A} generated by the physical layer meets the judgment condition 2, and the physical layer reports the candidate resource set S_{A} to the higher layer.

Example 1: in a case that UE1 wants to send three TBs continuously, and the three TBs are identical TBs, the UE1 needs to select three continuous time slot resources. UE1 generates a candidate resource set SA. The candidate resource set SA meets the judgment condition 1, and it contains resources with a continuous time slot length of three time slots, M=3, so that the judgment condition 2 is met, and the physical layer reports the candidate resource set SA to the higher layer.

(b) As another embodiment, a new judgment condition is set, i.e., for a length N of continuous time slots between candidate single-slot resources in the candidate resource set S_{A}, whether N>1 or N≥ M is met.

In a case that the above judgment condition is not met, i.e., the preset condition is not met, the physical layer performs the following steps.

The RSRP threshold *Th*(*pᵢ,pⱼ*) is increased by Xdb, for example, X=3db, and then it goes back to step 4 of determining the candidate resource set in R16 38.214, and executes from step 4 repeatedly until the candidate resource set S_{A} generated by the physical layer meets the judgment condition 2, and the physical layer reports the candidate resource set S_{A} to the higher layer.

Example 2: If the UE1 wants to continuously send three TBs, and the three TBs are the identical TB, it needs to select three continuous time slot resources. UE1 generates a candidate resource set S_{A} according to a new judgment condition. The candidate resource set S_{A} containing resources with a continuous time slot length of 3 time slots is reported to the higher layer.

## Claims

1. A method for continuous multi-slot transmission, performed by a user equipment, comprising:
determining a candidate resource set that meets a preset condition; and
selecting a target resource from the candidate resource set, wherein the target resource comprises continuous multiple single-slot resources in a time domain for transmitting continuous multiple transport blocks.

2. The method of claim 1, wherein determining the candidate resource set that meets the preset condition, comprises:
determining, by a physical layer of the user equipment, the candidate resource set that meets the preset condition and reporting the candidate resource set to a higher layer of the user equipment.

3. The method of claim 1, wherein selecting the target resource from the candidate resource set, comprises:
selecting the target resource from the candidate resource set by a higher layer of the user equipment.

4. The method of claim 1, wherein the preset condition comprises:
the number of single-slot resources in the candidate resource set being greater than a resource quantity threshold, and the candidate resource set comprising N continuous-slot resources, wherein N>1 or N≥M, M is the number of the continuous multiple transport blocks, and N and M are positive integers.

5. The method of claim 1, wherein the preset condition comprises:
the candidate resource set comprising N continuous-slot resources, wherein N>1 or N≥M, M is the number of the continuous multiple transport blocks, and N and M are positive integers.

6. The method of claim 4 or 5, further comprising:
in case that the candidate resource set does not meet the preset condition, repeating steps of increasing a reference signal receiving power (RSRP) threshold for resource exclusion by a specified value and performing resource exclusion to determine the candidate resource set, until the candidate resource set meets the preset condition.

7. The method of claim 4 or 5, wherein the number M of the continuous multiple transport blocks is pre-configured, or the number M of the continuous multiple transport blocks is indicated by downlink control information (DCI) or sidelink control information (SCI).

8. An apparatus for continuous multi-slot transmission, configured in a user equipment, comprising:
a processing module, configured to determine a candidate resource set that meets a preset condition; and
a selecting module, configured to select a target resource from the candidate resource set, wherein the target resource comprises continuous multiple single-slot resources in a time domain for transmitting continuous multiple transport blocks.

9. A user equipment, comprising:
a processor; and
a memory, configured to store instructions executable by the processor;
wherein the processor is configured to implement the steps of the method of any one of claims 1-7 when executing the executable instructions.

10. A computer readable storage medium having computer programs/instructions stored thereon, wherein when the programs/instructions are executed by a processor, the steps of the method of any one of claims 1-7 are implemented.

11. A chip, comprising a processor and an interface, wherein the processor is configured to read instructions to perform the steps of the method of any one of claims 1-7.
